# EUROPEAN PATENT APPLICATION

(11) **EP 1 619 608 A1**
(43) Date of publication of application: **25.01.2006**
(21) Application number: 04711702.3
(22) Date of filing: 17.02.2004
(51) Int. Cl.: G06K 17/00, G06K 19/00, B41J 3/00, G10L 13/00

(54) **COLOR DOT CODE SYSTEM**

(30) Priority: 10.03.2003 JP 2003108382; 22.05.2003 JP 2003180279; 27.11.2003 JP 2003435990
(71) Applicant: Limited Liability Company ADEU.NEK, Tokyo 206-0034 (JP)
(72) Inventor: Limited Liability Company ADEU.NEK, Tokyo 206-0034 (JP)
(74) Representative: Leinweber & Zimmermann
(86) International application number: PCT/JP2004/001684
(87) International publication number: WO 2004/081857

(57) **Abstract**

Abstract: A system for converting data of various types into color dot images to perform various basic data managements by using the color dot images, and the color dot images are recorded and retained on an ordinary medium such as paper according to the quality of a medium and the quality of a reading unit and then are read into a computer with a scanner or a camera to restore basic data of various types. First, data of various types are represented by a color code train, a color dot is allowed to correspond to each color code in the color code train to generate a color dot image or object of an arbitrary shape to perform various basic data managements using the color dot image, the size of each dot and a dot-to-dot interval are controlled for printing and drawing on a medium of a various types such as paper and recording and retaining, basic data is restored from the color dot image in a computer, color dot images recorded and retained on a medium of various kinds are read with a scanner or a camera to restore them to basic data of various types.

## Description

### FIELD OF THE INVENTION

The present invention discloses to a color dot code system relating to a method for converting documents, audio data, and other types of data into images and managing in a computer the original data based on those images, and printing the images on paper etc., recording to store the original data in a form differing to that of electronic methods such as floppy disks or CDs, reading the recorded and stored images using a scanner or a camera, and restoring the original data. The present invention also relates to a method whereby various types of data such as documents and audio data are converted to corresponding color codes and are represented by color code trains, arbitrarily shaped color dot images are generated to have arbitrarily sized dots based on the color code trains, and using those color dot images the original data are managed in a computer based on those images, or the color dot images are recorded to store in various types of media such as paper, cloth, glass, plastics and stones. When recording to store the images on the various media, the method according to the present invention makes it possible to decrease or increase the size of the recorded color dots and dot-to-dot interval corresponding to quality of the recording medium, quality of the recording device and quality of the reading device, and then records and stores the color dot images on the various types of media, reads the recorded and stored color dot images using a reading means suitable for the media on which the color dot images are recorded and stored, inputs them into a color code processing device, and restores the various types of original data such as documents and audio data from the color dot images by the color code processing device. Furthermore, the present invention also makes it possible to treat the color dot images as indirect data corresponding to direct data directly comprehensible by humans through sight, to mix the direct data and the indirect data, to manage them as one file or as a group of data in a computer, to print the direct data and indirect data on the same surface of paper when recording and storing on media such as paper, and to enable restoring the original data from the portion of indirect data by an indirect data restoration device, when necessary.

### BACKGROUND OF THE INVENTION

Nowadays, as computers and networks have become so widespread, a wide range of different types of data are managed in computers in the form of files. Accordingly, management of data files has become burdensome. Furthermore, as important data may be increasingly leaked or stolen from networks, data are increasingly stored in encrypted forms. However, encrypted data seems no more than a list of meaningless symbols through human eyes, and generates an unpleasant impression for human, therefore the encryption is undesirable for daily use of computers.

Meanwhile, in accordance with the popularization of bar-code systems and their application to all kinds of products, cash-registers in supermarkets and such like input the price of goods by reading the bar-codes applied to the products. The bar-codes applied to a product represent data describing the product in question using black and white lines. In addition to bar-codes of a single dimension, two-dimensional bar-codes have also been realized. However, the bar-codes can represent extremely small amount of information.

On the other hand, as photocopying technologies etc. has highly developed recently, it has now become extremely easy to counterfeit personal seals of approval and the like. Therefore, it is no longer easily determinable whether or not contracts or other printed documents were actually executed by the person indicated. In addition, many documents to be commonly referred by several people may have a part of the content which should be protected as personal information for preventing it from being referred by any other party. As for postcards, it is often desirable to conceal the content thereof from anybody other than the intended recipient, and for this reason, such postcards are in common use that maintain privacy by the method wherein two sheets of paper are stuck each other and then peeled apart when necessary. However, such postcards are complicated and expensive, and there remains a worry that they might be peeled off intentionally.

Meanwhile, all the data contained in a computer is digital in nature and there are many cases where this type of electronic data becomes no longer useable as time goes by. For example, the number of laptop computers provided with floppy disc drives has significantly decreased in recent years, leading to the state of affairs wherein data previously stored on floppy discs can no longer be read. It is now almost impossible to read data from 8" floppy discs, 5" floppy discs of the recent past, and even 3.5" discs of 1.2Mb version. On the other hand, pictures can always be viewed, even if they were made hundreds of years ago. This is because pictures are direct data. However, as music and voice data are recorded and stored in the form of electronic data, it is becoming increasingly difficult to playback such data stored on older media using modern devices.

Accordingly, objects of the present invention are to provide a system capable of converting various kinds of data into color dot images and then use those color dot images to manage data in computers, to provide a recording and storage system capable of converting a large volume of data, binary data, and other non-visible data into visible color dot images which can be easily recorded onto paper, wood, and other normal media, and capable of flexibly supporting different qualities of media and reading devices, to provide a system capable of creating printed documents of which counterfeit copies cannot be created, and to provide a system capable of reading the recorded and stored color dot images into a computer using a scanner or a camera and then restoring the various types of original data.

### SUMMARY OF THE INVENTION

The color dot code system of the present invention is comprising of a first means for representing various types of data such as documents, audio data etc. into a color dot train, for generating a color dot image of an arbitrary shape by relating the color dots to the color codes of the color dot train and then for managing various types of the original data in a computer using the color dot image; a second means for controlling size of each dot and interval between the dots, for recording and storing them through picturing, printing, or engraving of the image on various media such as paper, wood in cases of recording and storing on various medium such as paper, and for constructing an object corresponding to the color dot image using glass or stone balls having colors corresponding to each color dot; a third means for mixing direct data comprehensible by humans through direct expression such as written words, etc. with indirect data in the form of the color dot images, for managing them as the same file data in a computer, and for printing and recording the mixed direct data and indirect data on the same sheet in cases of using printing and recording medium such as paper; a fourth means for restoring the original data from the color dot image in a computer; and a fifth means for restoring a various kind of original data by reading into a color code processing device the color dot images recorded and stored on various medium such as paper using a scanner or some other reading devices or through photographs using a camera or the like.

In accordance with the above structure, the various forms of data stored in a computer can be converted into color dot images and the original various forms of data then managed in a computer using the color dot images, thus realizing a simple unified management of data. Furthermore, encrypted data and the like which can generate an unpleasant impression in humans, compressed data and other invisible data in its original form can be converted to visible data, and such environment is easily realized that humans can handle data more easily and data management becomes simpler in terms of usage of computers. In addition, even a large volume of data can be converted into color dot images, and furthermore, the color dot images are made readily acceptable to humans with an arbitrary shape having each dot of arbitrary size and dot-to-dot interval of arbitrary distance, and the color dot images are recorded and stored in normal media as paper, etc. What is more, fashion accessories, etc. can be constructed by rendering the color dot images using colored glass or stone balls, and the original various forms of data can be easily restored by reading them through the use of a normal computer peripheral scanner, etc.

### BRIEF DESCRIPTION OF THE DRAWINGS

FIG. 1 is a block diagram of the method of a color dot code system according to an embodiment of the present invention.
FIG. 2 is a block diagram of the color dot processing device.
FIG. 3 is a diagram illustrating the method for representing document data by a color code train.
FIG. 4 is a diagram illustrating the method for representing a color code train by a color dot image.
FIG. 5 is a diagram illustrating the method for printing and recording a color dot image on printing paper.
FIG. 6 is a process flowchart showing the document data restoration process from color dot images in the color dot code processing device.
FIG. 7 is a block diagram showing the real-time picture reading and restoring device.
FIG. 8 is a block diagram showing the real-time card reading and authentication device.
FIG. 9 is a block diagram showing the mixing system of direct data and indirect data.
FIG. 10 is a diagram showing an example of a contract realized through recording and printing of direct data and indirect data on a single sheet of paper.
FIG. 11 is a block diagram of the system for creating stickers and fashion accessories.
FIG. 12 is a diagram showing an example of method for generating color dot images of an arbitrary shape from various types of data.

### DETAILED DESCRIPTION OF THE PREFERRED EMBODIMENT

Hereinafter, the present invention will be described in detail referring to the attached drawings.

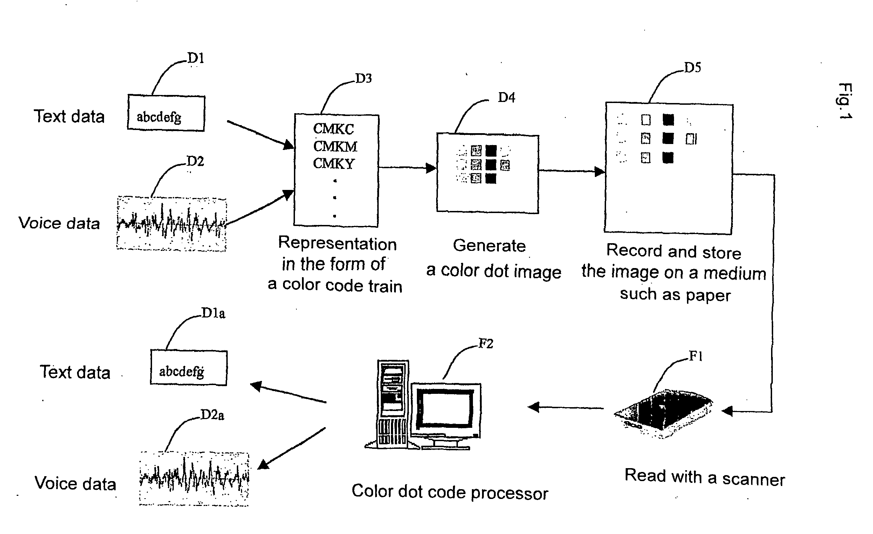

FIG 1 is a block diagram of a color dot code system in accordance with a preferred embodiment of the present invention whereby various types of data such as documents and audio data are rendered in the form of color dot images, and the various types of data such as documents and audio data are stored by recording these color dot images onto a medium such as paper or wood, and furthermore, the original various types of data are restored by reading the color dot images recorded and stored on the various types of medium using a camera or a scanner and processing thereof using a color dot code processor.

First of all, the text data D1, voice data D2, and various other types of data are represented in the form of a color code train D3. In terms of the color code employed, when printing by an ink jet printer and the like with printing paper, for example, the primary colors of the printing ink, C (cyan), M (magenta), Y (yellow), and K (black), etc. are used. Next, a color dot image D4 relating its color dots to the respective color codes is generated from the color code train D3. Following this, the color dot image D4 is recorded on one of various types of media such as paper using a method such as printing, thus recording and storing the various types of data such as documents and audio data as recorded images D5 on the media. Accordingly, in order to restore the original text data D1 or voice data D2 from the color dot images D4 recorded and stored on various types of media such as paper by the above-described method, the color dot image D5 is read into a color dot code processor F2 built by a personal computer or the like through a reading device F1 such as a scanner, and by performing restoration processing in the color dot code processor, the original text data D1 a and voice data D2a are restored.

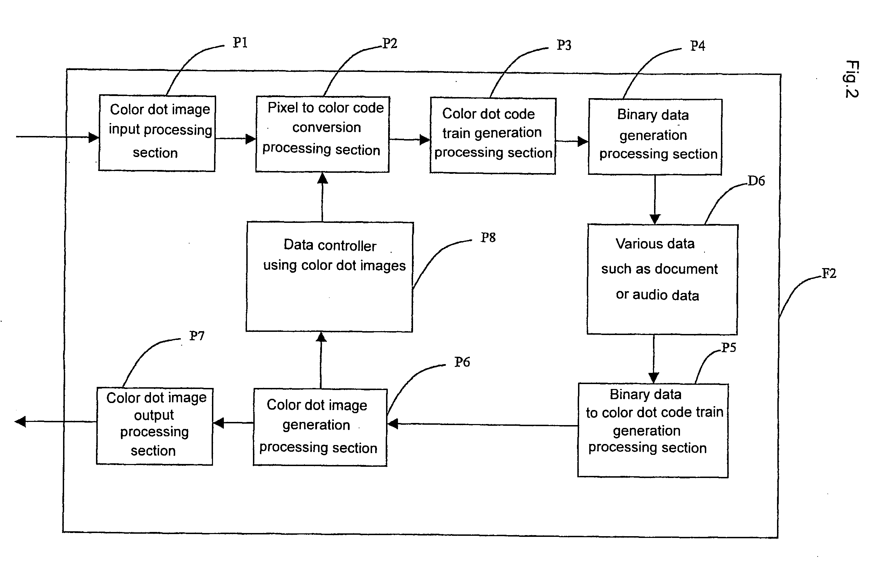

FIG. 2 is a block diagram of the color dot code processor F2. As shown in FIG. 2, the color dot code processor F2 is comprised of a color dot image input processing section P1, a pixel to color code conversion processing section P2, a color dot code train generation processing section P3, a binary data generation processing section P4, a binary data to color dot code train generation processing section P5, a color dot image generation processing section P6, a color dot image output processing section P7, and a data managing section P8 for managing various data using color dot images. The color dot image recorded and stored on a medium as paper is input into the color dot code processor F2 via the color dot image input processing section P1, and by processing in steps by the pixel to color code conversion processing section P2, the color dot code train generation processing section P3, and the binary data generation processing section P4, the original various types of data D6 are restored.

Furthermore, the original various types of data D6 such as documents and audio data are processed in steps by the binary data to color dot code train generation processing section P5, the color dot image generation processing section P6, and the color dot image output processing section P7, and are recorded and stored on a medium such as paper as color dot images.

In addition, the data managing section P8 for managing various data using color dot images manages the various types of data through use of the color dot images generated by the color dot image generation processing section P6.

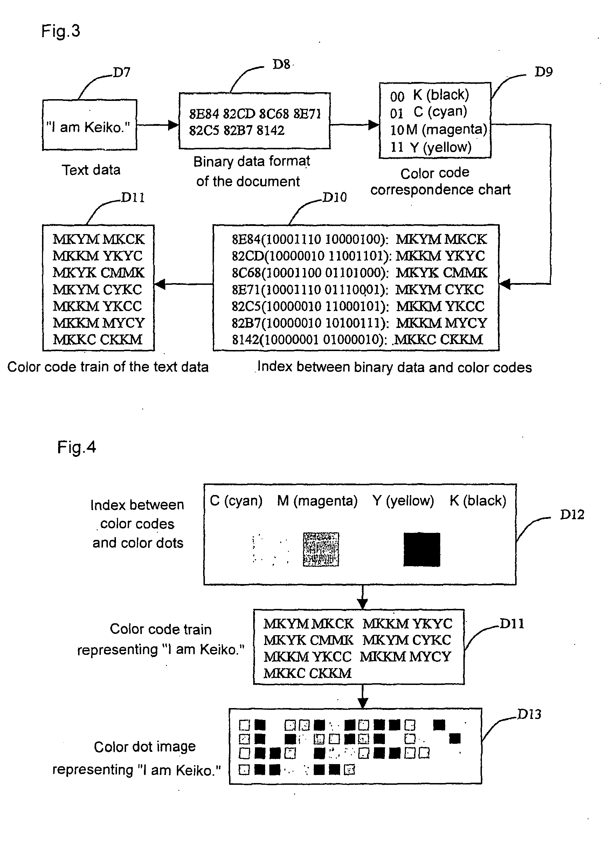

FIG. 3 is an explanatory diagram concerning the method for representing document data by a color dot code train. In FIG. 3, the text data D7 is represented in binary data format D8, for example, as the internal data format in a personal computer or other computing device. Accordingly, 2-bit representation is available when 4 types of color codes consisting of C (cyan), M (magenta), Y (yellow), and K (black) are used as the color codes. Therefore a correspondence chart D9 is obtained for bit information and color codes relationship, for example, wherein 00 corresponds to K (black), 01 corresponds to C (cyan), 10 corresponds to M (magenta), and 11 corresponds to Y (yellow). Therefore, the text data D7 converted to the binary data format D8 is applied with the correspondence chart D9 for performing indexing D10, then the color dot code train D11 is created.

FIG. 4 is an explanatory diagram relating to the method for representing a color dot code train by a color dot image. In this diagram, the color codes of C (cyan), M (magenta), Y (yellow), and K (black) are represented by color dots D12 having the corresponding color. Using these color dots D12, the color dot code train D11 for the text data is represented by a color dot image D13.

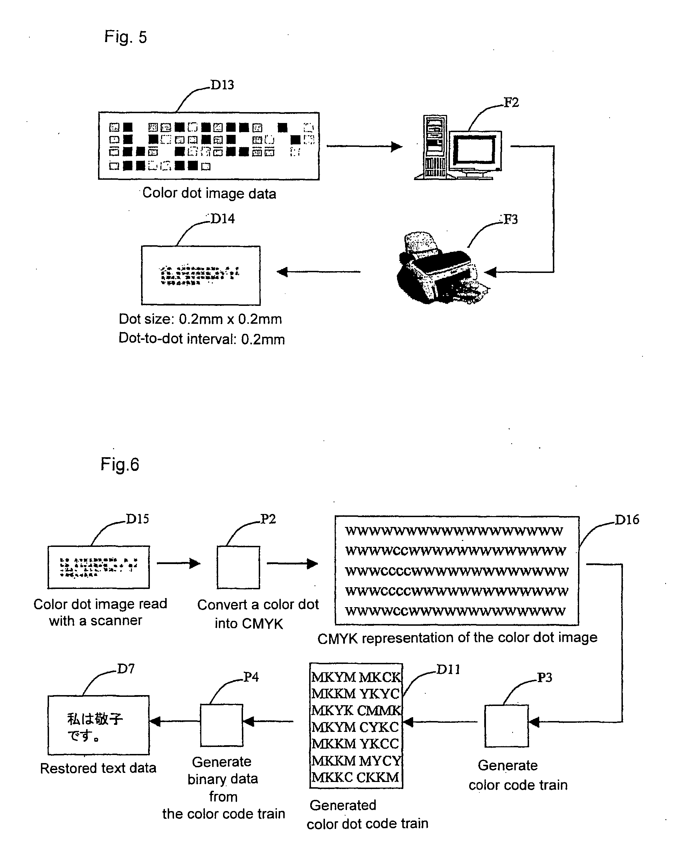

FIG. 5 is an explanatory diagram relating to the method for printing and recording a color dot image on paper using a printer. As shown in this diagram, the color dot code processor F2 such as a PC controls size of each dot and horizontal and vertical intervals between the dots of the color dot image D13, and a printer F3 generates a record or storage of the color dot image D14.

FIG. 6 is an explanatory diagram dealing with the method for restoring the original data from the color dot image read into the color dot image processing device using a scanner. As shown in this figure, the read color dot image D15 is converted into color codes corresponding to each pixel thereof using the pixel to color code conversion processing section P2 of the color dot code processor F2, and is stored as C (cyan), M (magenta), Y (yellow), and K (black) representation D16 of the color dot image. Next, the color code train D11 is generated using the color dot code train generation processing section P3 of the color dot code processor. Following this, the original document D7 is restored from the color code train D11 using the binary data generation processing section P4 of the color dot code processor.

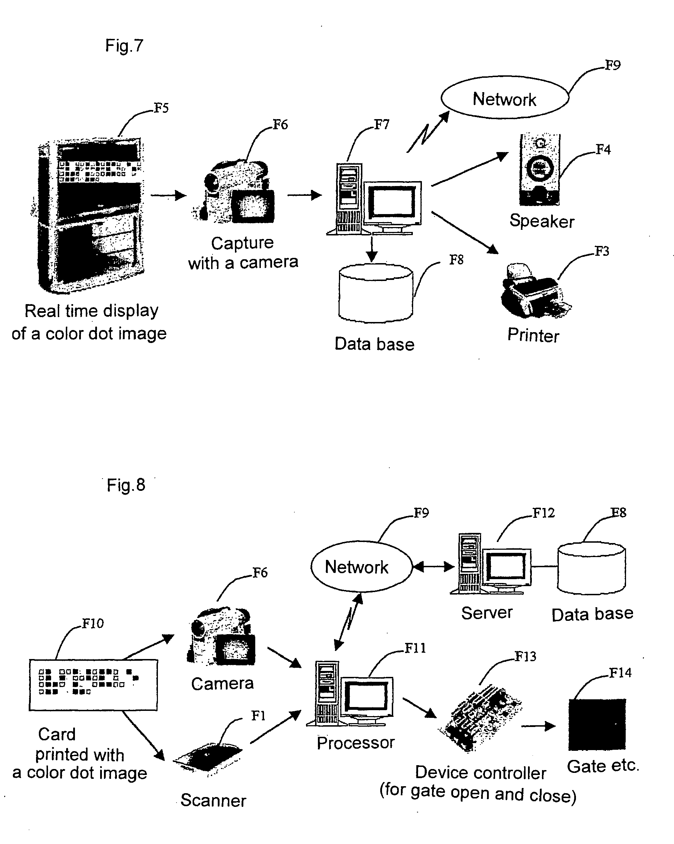

FIG. 7 is a block diagram showing the real-time picture reading and restoration device. As shown in this diagram, the color dot image displayed on a display device F5 such as a TV display is captured in real time into the processing device F7 of a picture reading and restoration device using a camera F6. Next, the color dot image data captured into the processing device F7 is restored in real time to the original data using the processing device F7, and the original data can be stored in a database device F8, transferred to a remote location via a network F9, output through a speaker F4 when the original data is audio data, etc., printed through a printer F3 when the original data is documents, etc.; furthermore, color dot images from the ever-changing display of the display device F5 such as a TV display are processed in real time so as to acquire various types of data in real time from the display device F5 such as a TV display.

FIG. 8 is a block diagram showing the real-time card reading and authentication device. As shown in this diagram, a color dot image is captured using a camera F6 or a scanner F1 into the processor F11 of the real time card reading and authentication device from a card F10 on which a color dot image of various types of data specific to the user thereof has been recorded. Then, using the processor F11, the various types of information specific to the card's user are restored in real time from the color dot image data captured in the processor F11. Following this, the processor F11 obtains a data specific to the user from a database F8 of a server F12 via a network F9 and performs cross-checking with the restored data specific to the user. In accordance with whether or not the user is authenticated by the results of cross-checking, the processor F11 issues an instruction for controlling the device F14 to the device controller F13, then the device F14 is got operable. For example, in the case where the card F10 is an access permit, etc., the device F14 corresponds to an access gate.

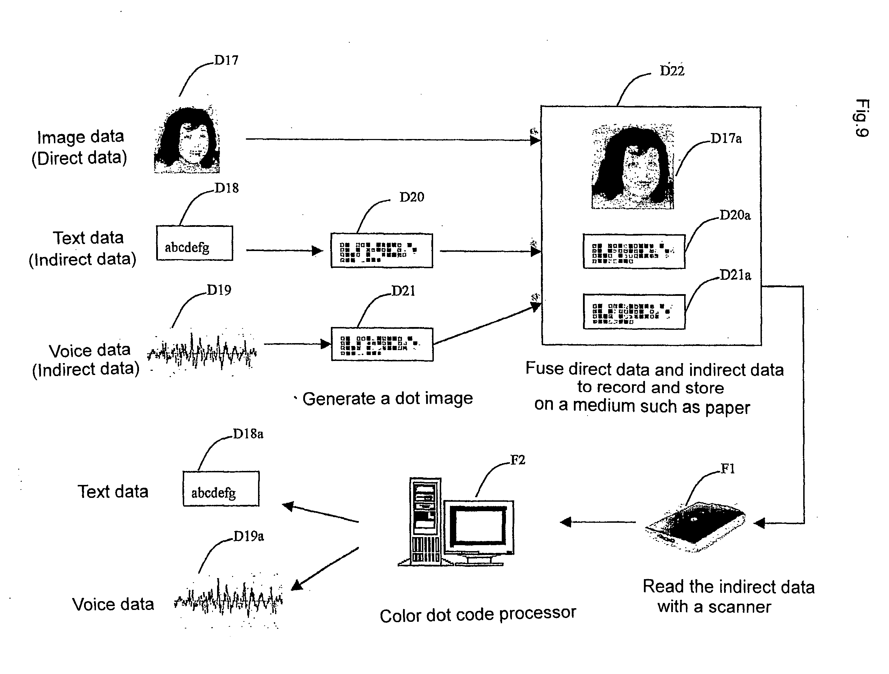

FIG. 9 is a block diagram of the mixing system of direct data and indirect data whereby direct data representing characters etc. of which expression are directly comprehensible by humans and indirect data constituted by a color dot code image converted from various types of data are mixed and are recorded and stored by printing on various types of media such as printing paper, wood, etc. and the color dot code image of the indirect data recorded and stored on the various types of media is read using a camera or a scanner, decoded, and converted into direct data. As shown in this diagram, image data D17 is used in the current form thereof to constitute direct data, text data D18 and voice data D19 are converted into dot images D20, D21 to constitute indirect data, and they are recorded and stored in a medium such as paper through printing etc. as the form of a medium D22 wherein the direct data and indirect data are mixed. The text data's indirect data portion D20a and the voice data's indirect data portion D21a within the medium D22 are read into a dot code processor F2 as a PC through a reading device F1 as a scanner, and by performing restoration thereof to direct data in the dot code processor, the original text data D18a and voice data D19a are restored.

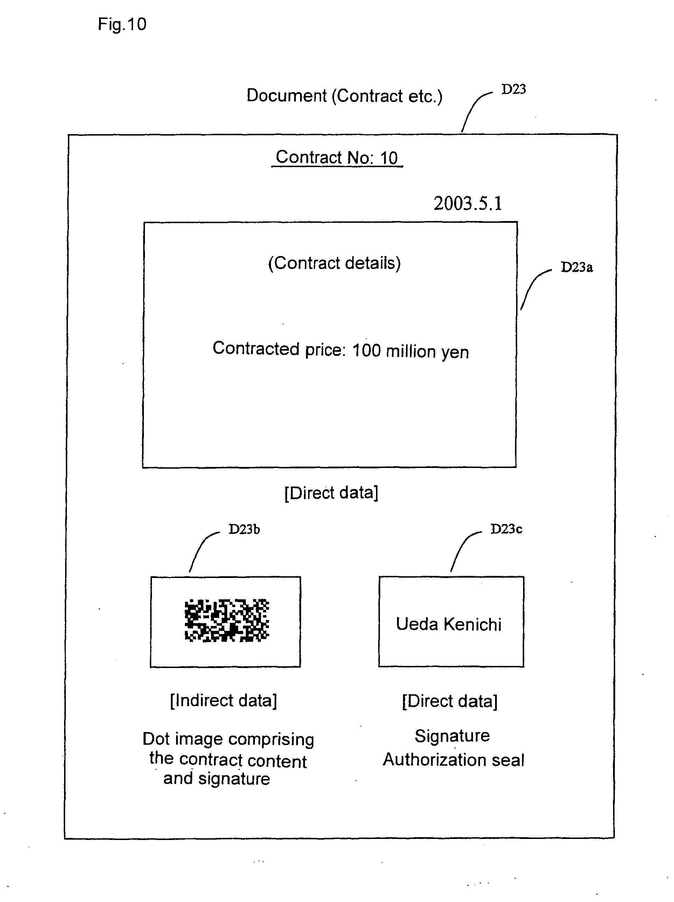

FIG. 10 is a diagram showing another example of a medium such as paper whereon mixture of direct data and indirect data are recorded and stored. In this diagram, the medium D23 such as paper recording and storing mixture of direct data and indirect data is a document such as a contract, which records the contract details D23a including the contracted price, the signature and authorization seal D23c as the direct data, and a dot image D23b comprising the main part of the contract content and signature encrypted using the private key of a public-key encryption system or the common key of a common key encryption system as the indirect data.

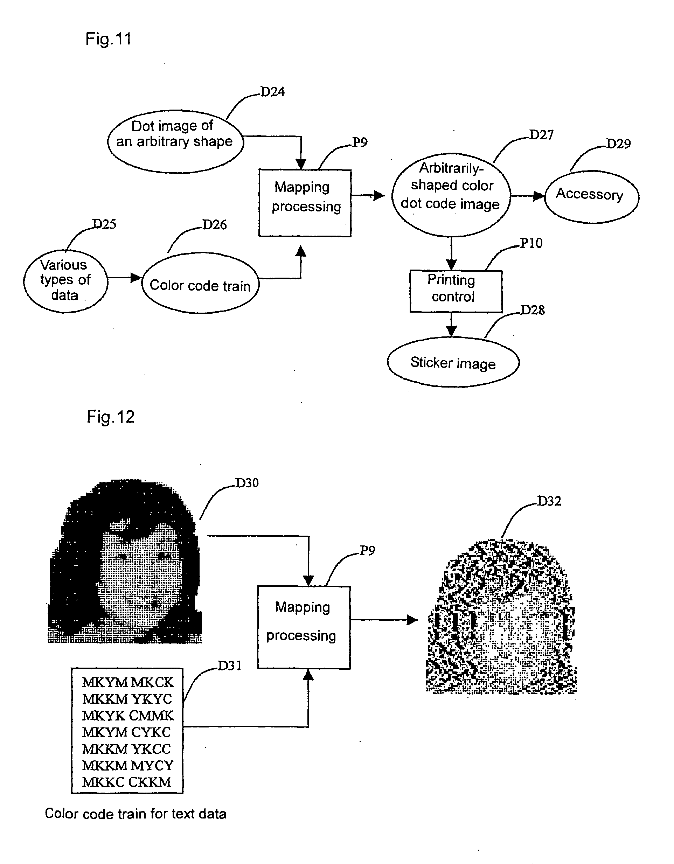

FIG. 11 is a block diagram of the system for creating stickers and fashion accessories. As shown in the diagram, a dot image D24 is generated having an arbitrary shape using dots of arbitrary sizes. Furthermore, the various types of data D25 are converted to a color code train D26. Next, each color code of the color code train D26 is indexed with each dot of the dot image of an arbitrary shape D24 through mapping processing P9. An arbitrarily-shaped color dot image D27 corresponding to the various types of data is generated by this mapping processing P9. Next, the arbitrarily-shaped color dot image D27 is printed as the sticker image D28 by controlling the size of the dots and the dot-to-dot interval through printing control P10. Furthermore, using the arbitrarily-shaped color dot image D27, glass or stone balls of various colors are indexed with each dot thus a fashion accessory D29 is created.

FIG. 12 is a diagram showing an example of method for generating color dot images of an arbitrary shape from various types of data by mapping color code train to arbitrarily-shaped color dot image. As shown in this diagram, by performing mapping processing P9 on the arbitrarily-shaped color dot image D30 and the color code train D31 for text data and indexing the colors of the color code train with each dot of the arbitrarily-shaped color dot image D30, a color dot image D32 of an arbitrary shape is generated for various types of data.

### INDUSTRIAL APPLICABILITY

As described above, a color dot code system according to the present invention is composed so as to have a means for converting various types of data into a color code train, a means for generating color dot images by indexing the converted color codes with color dots, and a means for printing and recording color dot images corresponding to various types of data on normal media such as paper, and by reading the printed and recorded color dot images into a computer using a scanner or a camera, etc., for restoring the original various types of data; it is possible to realize the consolidated management of direct data such as written characters and indirect data constituted by color dot images by converting various types of data into color dot images in a computer, and managing the original various types of data in the computer using the converted color dot images; to realize an easily manageable environment facilitating the easy usage of encrypted data and other data generating an unpleasant impression in humans, compressed data, and other data not visible in its unprocessed form by conversion thereof to visible data; to realize the construction of fashion accessories and the like from colored glass and stone balls in the form of arbitrarily-shaped color dot images readily acceptable to humans by conversion of various types of data; and to realize, by controlling the dot size and dot-to-dot interval of the color dot image and recording and storing thereof on a normal media such as paper, restoration of the original data of various types through reading using scanners, cameras, or other peripherals of normal PCs etc.

## Claims

1. A color dot code system, representing various types of data such as documents and audio data by color code trains, generating color dot images based on the color dot trains, managing the various types of original based on the color dot images data in a computer, and furthermore, recording and storing the various types of data by drawing the color dot images on various types of media such as paper and wood, and restoring the various types of data from the recorded and stored color dot images; comprising
a means for representing various types of data by a color code train;
a means for generating a color dot image corresponding to the color code train;
a means for managing the various types of data in a computer using the color dot image;
a means for recording and storing the color dot image on a medium such as paper through a method of printing, drawing or the like;
a means for producing an article as fashion accessory or the like or clothing using balls of colored glass balls, stone baiis or the like, yarn, fabric or the like, relating to the color dot image;
a means for reading the recorded and stored color dot image using a reading device as a scanner, a camera or the like;
a means for processing the color dot images read by the reading means using a color dot code processor; and
a means for restoring the various types of data such as documents and audio data from the color dot image using the color dot code processor.

2. The color dot code system according to claim 1, wherein character of basic colors for the color code train is appropriate to quality of the printer for recording and storing, quality of the recording media, and precision of the device for reading the color dot images recorded on the media, for example, when printing and recording on paper using printing ink or the like, the four primary colors of the printing ink, cyan (C), magenta (M), yellow (Y), and black (K), are used, alternatively, blue is used instead of cyan (C) and red is used instead of magenta (M); furthermore, when the printing paper, printer, and reading device have high qualities, a multiplicity of colors such as 8 colors or 16 colors are used in addition to augment the 4 colors, and when data is managed in the computer, the kind of colors suitable for favorable display of images are used.

3. The color dot code system according to claim 1, wherein the means for representing various types of data by the color code train represents the colors by binary data used in the computer or the like corresponding to the number of the colors to be used, so that when the above-described four colors of cyan (C), magenta (M), yellow (Y), and black (K) are used, the four colors are represented by every 2-bit expression.

4. The color dot code system according to claim 1, wherein the means for recording and storing the color dot images by printing or drawing on the various recording media such as paper, wood, glass, fabric, and plastic determines size of the color dots and the do-to-dot intervals in response to quality of the media and precision of the recording device for the media, so that when a current inkjet printer for personal computers prints out on a printer paper, in consideration of the printer paper quality and the printing precision of the ink jet printer, the size of the printing color dot is set to, for example, no less than 0.05 mm in height and no less than 0.05 mm in width, and the dot-to-dot interval is set to, for example, no less than 0.05 mm in the transverse direction (i.e., the scanning direction of the printer head) and no less than 0.05 mm in the lateral direction (i.e., the direction of paper feed).

5. The color dot code system according to claim 1, wherein the means for reading the color dot images recorded and stored on various media such as paper is of contact type or non-contact type, and magnifying type using a lens system, the contact type including a scanner, a hand-held scanner or the like used as a peripheral device of a personal computer, and the non-contact type including a digital camera, a video camera, or a mobile phone or a hand-held terminal attached with a camera.

6. The color dot code system according to claim 1, wherein the color dot image has an arbitrary shape, and the dots have arbitrary size individually.

7. The color dot code system according to claim 1, further comprising a data management system for performing data management in a computer utilizing the color dot images.

8. The color dot code system according to claim 1, providing a mixture of direct data as written characters and the like comprehensible by humans as it is and indirect data in the form of the color dot images converted from various types of data, performing data management in a computer with the data mixture as a single file in the same database, and when printing thereof, printing the direct data and indirect data in mixed form on the same paper surface as to fuse the direct data and the indirect data; comprising
a means for managing various forms of data by restoring and converting to the direct data from the indirect data,
a means for reading the color dot image of the printed indirect data portion using a camera, a scanner, or the like, and
a means restoring the color dot image corresponding to the scanned indirect image and performing conversion thereof into direct data comprehensible to humans.

9. The color dot code system according to claim 1, printing on printed matter as contract documents or the like a mixture of direct data represented by the contract document and indirect data in the form of a colored (including monochrome) dot image converted from an electronic certificate proving the genuine nature of the contract or a document encrypted using the contracted party's secret key, thus fusing the direct data and indirect data; further comprising
a means for reading the colored (including monochrome) dot image corresponding to the indirect data using a camera, a scanner, or the like, and
a means for authenticating the printed matter such as contract document being genuine by decoding the read indirect data, performing conversion thereof to direct data, and restoring the electronic certificate or the encrypted document.

10. The color dot code system according to claim 1, further comprising a means for realizing a secret section through the color dot images in printed matter or in internal computer data to be referenced by a multiplicity of people intended to be referenced by concerned parties only and not by third parties, and a means for encrypting a secret section within printed matter using the public key of the owner or the object person or the common key of a group section, and representing the encrypted data as indirect data using the color dot image, the secret section being intended to remain confidential within printed matter that may possibly be readily exposed to or referenced by third parties.

11. A medium such as paper, wood, glass or the like whereon indirect data expressed by a color dot image is printed or direct data and indirect data are both printed.

12. A program for realizing on a computer the color dot code system according to claim 1, claim 2, claim 3, claim 4, claim 5, claim 6, claim 7, claim 8, claim 9, or claim 10.

## Amended claims

### Amended claims under Art. 19.1 PCT

**1.** A color dot code system, representing various types of data such as documents and audio data by color code trains, generating color dot images based on the color dot trains, managing the various types of original based on the color dot images data in a computer, and furthermore, recording and storing the various types of data by drawing the color dot images on various types of media such as paper and wood, and restoring the various types of data from the recorded and stored color dot images; comprising
a means for representing various types of data by a color code train;
a means for generating a color dot image corresponding to the color code train;
a means for managing the various types of data in a computer using the color dot image;
a means for recording and storing the color dot image on a medium such as paper through a method of printing, drawing or the like;
a means for producing an article as fashion accessory or the like or clothing using balls of colored glass balls, stone balls or the like, yarn, fabric or the like, relating to the color dot image;
a means for reading the recorded and stored color dot image using a reading device as a scanner, a camera or the like;
a means for processing the color dot images read by the reading means using a color dot code processor; and
a means for restoring the various types of data such as documents and audio data from the color dot image using the color dot code processor.

**2.** The color dot code system according to claim 1, wherein character of basic colors for the color code train is appropriate to quality of the printer for recording and storing, quality of the recording media, and precision of the device for reading the color dot images recorded on the media, for example, when printing and recording on paper using printing ink or the like, the four primary colors of the printing ink, cyan (C), magenta (M), yellow (Y), and black (K), are used, alternatively, blue is used instead of cyan (C) and red is used instead of magenta (M); furthermore, when the printing paper, printer, and reading device have high qualities, a multiplicity of colors such as 8 colors or 16 colors are used in addition to augment the 4 colors, and when data is managed in the computer, the kind of colors suitable for favorable display of images are used.

**3.** The color dot code system according to claim 1, wherein the means for representing various types of data by the color code train represents the colors by binary data used in the computer or the like corresponding to the number of the colors to be used, so that when the above-described four colors of cyan (C), magenta (M), yellow (Y), and black (K) are used, the four colors are represented by every 2-bit expression.

**4.** The color dot code system according to claim 1, wherein the means for recording and storing the color dot images by printing or drawing on the various recording media such as paper, wood, glass, fabric, and plastic determines size of the color dots and the do-to-dot intervals in response to quality of the media and precision of the recording device for the media, so that when a current inkjet printer for personal computers prints out on a printer paper, in consideration of the printer paper quality and the printing precision of the ink jet printer, the size of the printing color dot is set to, for example, no less than 0.05 mm in height and no less than 0.05 mm in width, and the dot-to-dot interval is set to, for example, no less than 0.05 mm in the transverse direction (i.e., the scanning direction of the printer head) and no less than 0.05 mm in the lateral direction (i.e., the direction of paper feed).

**5.** The color dot code system according to claim 1, wherein the means for reading the color dot images recorded and stored on various media such as paper is of contact type or non-contact type, and magnifying type using a lens system, the contact type including a scanner, a hand-held scanner or the like used as a peripheral device of a personal computer, and the non-contact type including a digital camera, a video camera, or a mobile phone or a hand-held terminal attached with a camera.

**6.** The color dot code system according to claim 1, wherein the color dot image has an arbitrary shape, and the dots have arbitrary size individually.

**7.** The color dot code system according to claim 1, further comprising a data management system for performing data management in a computer utilizing the color dot images.

**8.** The color dot code system according to claim 1, providing a mixture of direct data as written characters and the like comprehensible by humans as it is and indirect data in the form of the color dot images converted from various types of data, performing data management in a computer with the data mixture as a single file in the same database, and when printing thereof, printing the direct data and indirect data in mixed form on the same paper surface as to fuse the direct data and the indirect data; comprising
a means for managing various forms of data by restoring and converting to the direct data from the indirect data,
a means for reading the color dot image of the printed indirect data portion using a camera, a scanner, or the like, and
a means restoring the color dot image corresponding to the scanned indirect image and performing conversion thereof into direct data comprehensible to humans.

**9.** The color dot code system according to claim 1, printing on printed matter as contract documents or the like a mixture of direct data represented by the contract document and indirect data in the form of a colored (including monochrome) dot image converted from an electronic certificate proving the genuine nature of the contract or a document encrypted using the contracted party's secret key, thus fusing the direct data and indirect data; further comprising
a means for reading the colored (including monochrome) dot image corresponding to the indirect data using a camera, a scanner, or the like, and
a means for authenticating the printed matter such as contract document being genuine by decoding the read indirect data, performing conversion thereof to direct data, and restoring the electronic certificate or the encrypted document.

**10.** The color dot code system according to claim 1, further comprising a means for realizing a secret section through the color dot images in printed matter or in internal computer data to be referenced by a multiplicity of people intended to be referenced by concerned parties only and not by third parties, and a means for encrypting a secret section within printed matter using the public key of the owner or the object person or the common key of a group section, and representing the encrypted data as indirect data using the color dot image, the secret section being intended to remain confidential within printed matter that may possibly be readily exposed to or referenced by third parties.

**11.** amended). A product such as a seal, accessories, a drawing, a craft object, clothes or the like produced by the method according to claim 1.

**12.** A program for realizing on a computer the color dot code system according to claim 1, claim 2, claim 3, claim 4, claim 5, claim 6, claim 7, claim 8, claim 9, or claim 10.
